# EUROPEAN PATENT SPECIFICATION

(11) **EP 1 184 702 B1**
(45) Date of publication and mention of the grant of the patent: **21.12.2011**
(21) Application number: 00307412.7
(22) Date of filing: 29.08.2000
(51) Int. Cl.: G02B 21/04

(54) **Infrared imaging microscope**
Mikroskop für Infrarotabbildung
Microscope d'imagerie infrarouge

(43) Date of publication of application: 06.03.2002
(73) Proprietor: PerkinElmer Singapore Pte. Ltd., Singapore 139947 (SG)
(72) Inventor: Carter, Ralph Lance, Nr Thame Oxon OX9 3QY (GB); Hoult, Robert Alan, Beaconsfield Bucks HP9 2LT (GB)
(74) Representative: Smith, Norman Ian

(56) References cited:
- EP-A- 0 731 371
- FR-A- 1 602 591
- GB-A- 1 101 144
- US-A- 6 084 727
- SCHIERING D W ET AL: "AN FTIR MICROSCOPE" AMERICAN LABORATORY,US,INTERNATIONAL SCIENTIFIC COMMUNICATIONS, SHELTON,, 1 November 1990 (1990-11-01), pages 26,29-31,33-, XP000195637 ISSN: 0044-7749

## Description

This invention relates to an infrared imaging microscope, particularly of the type used to carry out FT-IR measurements.

A known apparatus of this type is an FT-IR microscope which is used to analyse small samples of material. The microscope has a viewing configuration and a measurement configuration. In both configurations the microscope can be used either in a transmitting mode or a reflecting mode depending upon the nature of the sample. Typically such a microscope is used in conjunction with an IR spectrophotometer. A microscope of this type generally includes a source of visible radiation and can receive analysing infrared radiation from a source in the spectrophotometer. A typical microscope includes a sample stage for carrying a sample to be investigated and optical elements for guiding radiation from one or other of the radiation sources to the sample stage. These elements can include a plain mirror, a toroid coupling optic and a Cassegrain mirror assembly acting as a condenser. The microscope also includes a Cassegrain mirror assembly which images the sample at a given magnification at an intermediate image plane from where the radiation is directed to an infrared detector. The microscope also includes an optical microscope which enables an image of the sample on the stage to be viewed optically by means of visible radiation and thereby enables areas of interest to be identified. The microscope can also include a video camera which can be used in conjunction with the optical microscope in order to create an image of the sample for display on a display means of a computer which is used to control the microscope.

Modem microscopes of this type have a stage which can be moved under computer control to allow several areas of interest to be identified, their coordinates stored and data collected subsequently automatically on the basis of that stored data. Such microscopes also include a variable aperture which can be computer controlled and is located at the intermediate image plane to mask off a portion of the sample. This combined with an oversized detector element enables the measurement of the infrared spectrum of the selected area of the sample. By stepping the stage and repeating the measurement, the system can slowly build up a digital image of the sample pixel-by-pixel.

In an alternative type of infrared microscope, the detector takes the form of an array of elements each contributing a pixel to the image. In this case, the variable aperture is not used and the pixel extent is determined by the physical size of the element.

The effective size of a pixel at the sample is determined by the overall magnification of the optical elements of the system in conjunction with the parameters of the variable aperture in one case, and the detector element in the other case. There is a need in such microscopes to provide a facility which enables the magnification to be varied on an automatic basis. Current microscopes which permit magnification changes rely upon manually operated arrangements, for example, ones which require the interchanging of the Cassegrain objectives or on the provision of a second sample position. The present invention is concerned with a microscope which provides a facility for changing the magnification automatically.

FR-A-1602591 describes an imaging optical microscope having a magnifying assembly which includes lenses which can be rotated into a light beam to vary the magnification of the microscope.

The document further describes optical elements for guiding analysing radiation to a sample stage and for directing radiation from a sample under investigation to a detector means.

According to the present invention there is provided an infrared imaging microscope including a sample stage, an infrared detector means and optical elements for guiding analysing infrared radiation to the sample stage and for directing radiation from a sample under investigation to said detector means, said elements including a Cassegrain objective mirror which focuses radiation emanating from the sample at an intermediate image plane between the objective and the detection means, wherein the microscope includes a magnifying assembly which comprises one or more mirrors and which is disposed between the objective mirror and the intermediate image plane, said assembly being movable between a first position in which radiation reflected by the objective mirror can pass directly to the intermediate image plane and an operative second position in which radiation reflected by the objective mirror is incident on the magnifying assembly to thereby change the magnification provided by the optical elements of the microscope, the magnifying assembly being so arranged that radiation emanating therefrom is focused at the intermediate image plane.

The magnifying assembly may include a reflecting element which in its operative position reflects the beam of radiation away from its normal direction of propagation, and wherein said magnifying mirror or mirrors receive the reflected radiation.

The assembly may include first and second magnifying mirrors the first of which receives radiation from the reflecting element and the second of which receives the radiation from the first magnifying mirror, and a second reflecting element for directing radiation from the second magnifying mirror along its normal direction of propagation. The first and second mirrors may comprise spherical mirrors. The first and second reflecting elements may be plane mirrors.

The magnifying assembly may be movable between an operative and inoperative condition by rotation about an axis.

The assembly may be moved between an operative position in which the reflecting element is located in the beam of radiation and an inoperative position in which the radiation can propagate to the detector elements without magnification by the magnifying assembly by rotation about an axis through the first and second magnifying mirrors. The angle of rotation through which the assembly can be rotated may be of the order of 90°.

The microscope may include a shield for shielding the detector from unwanted radiation, said shield being switchable between an operative and an inoperative position.

The shield may comprise an element disposed along the propagation path of radiation reflected from the first magnifying mirror to the second magnifying mirror, said element having therein an aperture and acting as a cold shield to prevent unrequired radiation arriving at the detector. Said element may comprise a plane mirror which allows through the aperture a beam of rays to be detected but blocks rays outside that beam.

The invention will be described now by way of example only, with particular reference to the accompanying drawings. In the drawings:
Figure 1 is a side schematic view of an FT-IR microscope constructed in accordance with the present invention, and
Figure 2 is a more detailed view of a magnification assembly used in the microscope of Figure 1;
Figure 2a shows on an enlarged scale part of the assembly of Figure 2, and
Figure 3 illustrates the principle of a cold shield.

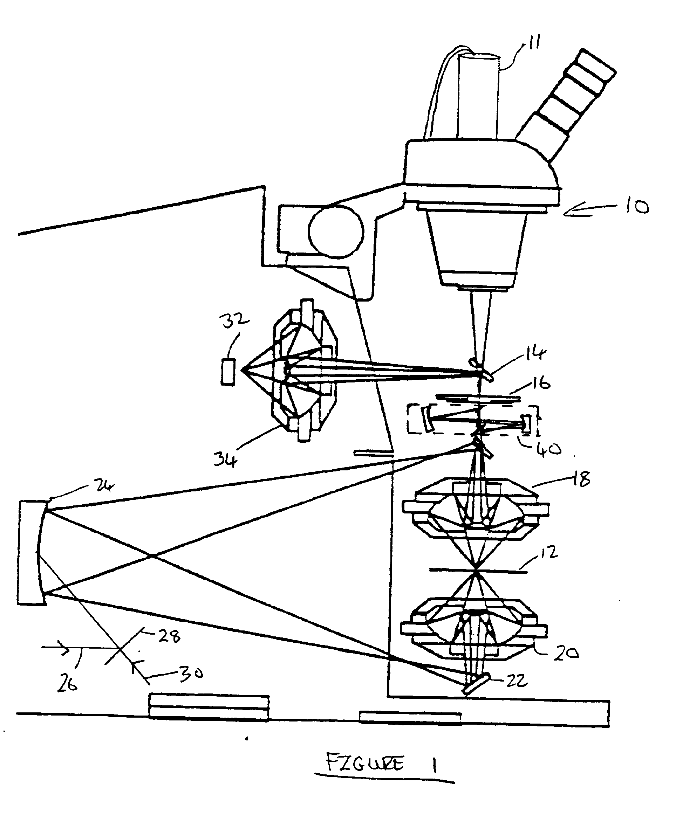

Referring to Figure 1 there are shown the principal elements of an FT-IR microscope of an embodiment of the present invention. This microscope includes an optical microscope (10) which can be used to view a sample on a sample stage (12) through a dichroic mirror (14), a remote aperture (16) and an objective Cassegrain mirror assembly (18). The optical microscope can incorporate a video camera (11) which is coupled to a computer which controls the microscope. The video camera (11) can be used to create on the display device of the computer a video image of a sample under investigation. The microscope also includes a condenser Cassegrain lens assembly (20), a lower mirror (22) and a toroid reflector (24). The microscope can receive radiation from a source of infrared radiation (not shown) which may be located in an associated spectrophotometer. The incoming infrared beam (26) is directed by way of a flat dichroic mirror (28) towards the toroid reflector (24). The microscope includes a source of visible radiation (not shown) which can produce a beam (30) of visible radiation along a path which extends through the flat mirror (28). The visible radiation source can be mounted at a suitable location in the microscope.

A detector of infrared radiation such as an MCT detector (32) is disposed laterally from the dichroic mirror (14) and can receive infrared radiation reflected from that mirror by way of a detector Cassegrain mirror assembly (34). The way in which a microscope of this general form operates will be apparent to those skilled in the art and a description can be found for example in an article by D.W. Schiering, E.G. Young and T.P. Byron entitled "An FTIR microscope" published in American Laboratory, November 1990.

In microscopes of the present type the stage (12) is usually movable under computer control in at least a horizontal plane so that areas of interest of a sample located on the stage (12) can be identified using a video image generated by the video camera (11) and data relating to those locations stored in the computer. The computer then subsequently controls movement of the stage automatically to obtain measurements from the identified areas of the sample. A detailed description of a microscope incorporating this facility can be found in EP-A-0731371.

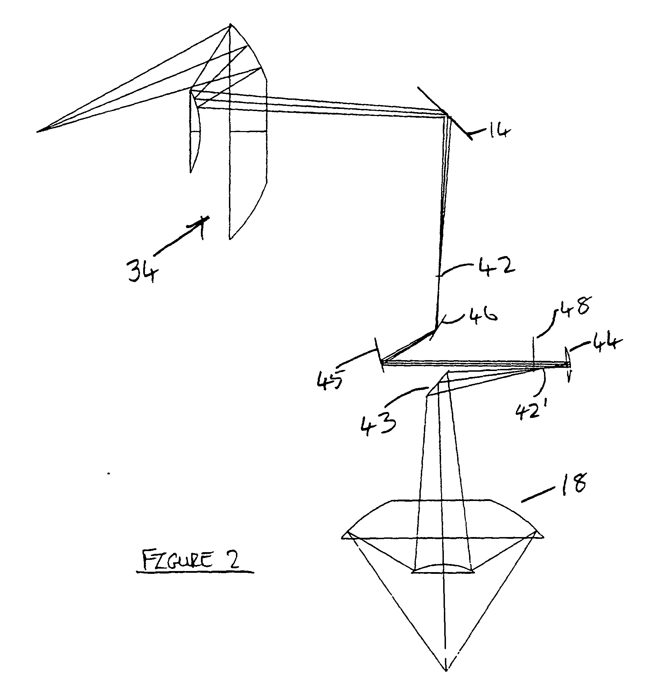

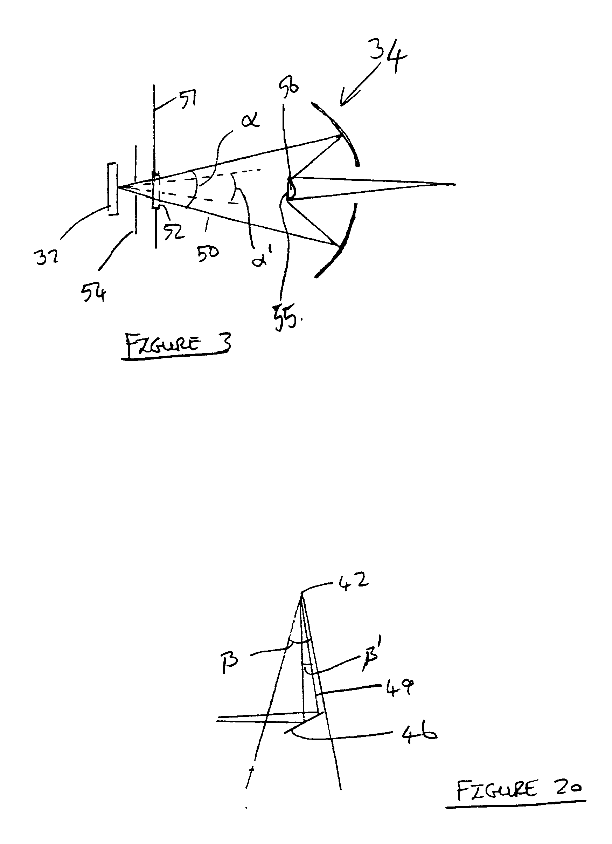

It will be seen that the present embodiment includes an assembly which is shown at (40) and is disposed in the beam of radiation propagating towards the remote aperture (16). This is an assembly which can be moved into or out of the beam of radiation in order to change the magnification provided by the microscope. The assembly is shown in more detail in Figure 2 of the drawings and can be seen to be located between the objective Cassegrain (18) and the position (42) where that Cassegrain normally forms its intermediate image. The assembly includes the first planar mirror (43), a first generally spherical mirror (44), a second generally spherical mirror (45) and a second planar mirror (46). The elements (43 to 46) are formed as a single integral unit which can be rotated about a horizontal axis extending through the spherical mirrors (44 and 45). Thus the assembly can be rotated from the position shown in Figure 2 of the drawings in which the mirror (43) deflects the beam of radiation propagating from the Cassegrain objective (18) towards the mirror (44), to a position in which the mirrors (46 and 43) lie in a common horizontal plane and are therefore disposed out of the beam of radiation propagating from the Cassegrain. The assembly also includes a planar reflector (48) which acts as a cold shield as will be described later.

With the assembly (40) in the position shown in Figure 2 of the drawings, radiation emanating from the sample on the sample stage (12) is collected by the Cassegrain objective (18) and intercepted by the planar mirror (43) so that it is directed towards the spherical mirror (44) via a new intermediate focus (42'). The radiation is then reflected by the spherical mirror (44) and propagates as a substantially parallel beam towards the second spherical mirror (45) before being reflected back towards the second planar mirror (46) and then focused at the original intermediate focus (42). It should be noted that the cold shield (48) has an aperture formed therein through which the parallel beam can pass. Thus, by inserting the assembly of components (44 to 46) into an operative position, the image is returned to the normal position (42) of the intermediate image, but has been magnified by the magnification factor provided by the two spherical mirrors (44 and 45). Typically this factor will be in the region of four.

The assembly of magnifying elements of the present embodiment is made up of four elements (44 to 46) and these can be conveniently aligned and held rigidly in an assembly which is separate from the other elements of the microscope and simply switched into or out of the radiation beam emanating from the objective Cassegrain (18) by a rotation step in order to provide an additional four times magnification whenever that is required. The rotation step through 90° is one example of a way in which the assembly can be switched into or out of the beam and is a particularly simply arrangement. It will be apparent to those skilled in the art that a simple rotation of this form can be automated using a simple motor in conjunction with two end stops. Only one of the end stops needs to be precisely located, namely that which is used to locate the elements in the position shown in Figure 2. The stop which controls the positioning of the assembly at its non-operative position does not require such accurate location.

It will be seen from Figure 2 and also particularly from Figure 2a that when the assembly of magnifying elements is in its operative position, the cone of rays (β') arriving at the intermediate focus (42) has a narrower cone angle than that of the cone of rays (β) arriving at the intermediate focus when the magnifying assembly is not in its operative position. It should be noted that Figure 2a is intended to illustrate the different cone angles and is not necessarily to scale. The difference in cone angles is a natural consequence of providing increased magnification. It should be noted that the beam (49) provided by the components of the magnification assembly (40) is directed at an angle to the image plane following only one side of the original cone (β) rather than a scheme of routing rays near normal to the surface. This is because the rays close to the axial direction would be intercepted by the blind spot generated by the secondary of the detector Cassegrain (34) as can be appreciated from the rays emanating from the objective Cassegrain (18). In fact the proportions of the Cassegrain elements dictate that the extra magnification introduced by the assembly should be at least four times in order to keep the exit beam narrow enough to avoid vignetting by the detector Cassegrain secondary.

It will be appreciated that the arrangement shown in Figure 2 is one example of a magnification assembly which can be used. Other combinations of mirrors are possible such as for example a spherical mirror and a flat mirror, or two parabolic mirrors or two ellipsoidal mirrors. However, while such aspheric mirrors may provide minor improvements in image quality, they are substantially more difficult and expensive to manufacture. It is also possible to use mirrors which are toroidal approximations to the ideal shape, these mirrors being a suitable compromise between cost and quality. It will also be appreciated that it is possible to use ray trace optimisation programs in order to generate optimum surface figures that are not true conic sections.

In a further alternative the beam from the second spherical mirror could be directed below rather than above its input to create a C-beam geometry. This scheme is probably most advantageous in an arrangement comprising a combination of two parabolic mirrors chosen to minimise aberration in this configuration.

An important factor in all alternative arrangements is the need to control image aberration, maintaining the smallest practical angle between input and output beams at each of the curved mirrors in the magnification assembly.

As referred to above when the magnification assembly is in its operative position the beam of radiation propagating towards the intermediate focus (42) has a cone angle which is narrower than that when the magnification assembly is not in its operative position. This bundle of rays propagates to the detector (32) and the result is that the detector field of view is under-filled compared with the situation when the magnifying assembly is not operative. The detector, being an MCT type detector, is typically cooled to liquid nitrogen temperatures and is usually located in a Dewar type vessel. There is the possibility with the present arrangement of enhancing the signal-to-noise ratio in the 4x magnification situation by masking out room temperature photons arriving at the detector in the unused portions of its field of view. Whilst this could be achieved by a switched cold shield inside the detector to match the field of view which exists when the 4x magnification is used this can be difficult to implement inside a Dewar container.

This will be explained initially by reference to Figure 3. Figure 3 shows schematically the MCT detector (32) receiving IR radiation (50) via the detector Cassegrain (34). The detector (32) is located within a Dewar vessel those wall is shown at (51) so that its temperature can be maintained at 77K. Radiation to be detected enters the Dewar vessel through a window (52). A cold shield (54) is disposed between the window (52) and the detector (32) and operates to ensure that only radiation within cone angle α is incident on the detector. α is the cone angle of rays reflected from the mirror (14) when the magnification assembly (40) is not in its operative position. The cold shield (54) thus restricts the field of view of the detector (32) to that which is necessary to receive the incoming radiation (50) which is to be detected thereby substantially preventing infra red radiation from the relatively warm surrounding region from reaching the detector.

A typical detector (32) has a field of view matched to the input beam (50) at a focal ratio of about f/1. When the magnifying assembly is in its operative position the cone angle of the beam incident on the detector reduces to α' as shown in Figure 3. The angular spread of the beam now corresponds to approximately f/4. It can be seen that in this situation the detector can receive "warm" photons from the region between the cones α and α'. The cold shield used for cone angle α is not appropriate for cone angle α' since it allows in these warm photons.

The cold shield is located within the Dewar vessel and it is not a simple matter to provide within that vessel a switched cold shield which could cater for both cone angles.

We have recognised that it is possible to provide a switched cold shield using an appropriate optical component or components which are disposed externally of the Dewar vessel. Any such switched cold shield should operate to image the detector onto a cold object in that part of the field of view of the detector not used for the input beam and not covered by existing cold shield (54). This could be within the interior of the Dewar detector such as the detector itself and its immediate surroundings. As an example a mirror placed outside the Dewar vessel could be located to image the detector back on itself or onto an adjacent non-reflecting cold area. Such a mirror would require in it an aperture to allow through the beam (50).

Figure 2 shows one way in which the cold shield can be implemented using the plane mirror (48).

With the magnification assembly of Figure 2 it is possible to provide an effective cold shield externally of the Dewar in the following way. The planar mirror (48), in which is formed a through hole, is placed between the spherical mirrors (44) and (45) as shown. The hole is so dimensioned to allow the parallel beam of rays reflected from the first spherical mirror to pass through, but also to prevent rays outside that beam from propagating. More importantly, rays travelling in reverse through the system, but outside the illustrated beam, are reflected back on themselves by the plane mirror (48). The significance of this is that in unused parts of the detector field of view the detector sees in effect a reflection of itself or radiation emanating from a body at 77K rather than room temperature. 77K is typically the temperature inside a Dewar containing the MCT detector. Since the detector can have significant reflectivity it can be desirable to enhance this scheme further by tilting the plane mirror (48) slightly so that the detector images back to a spot adjacent to itself which may then be coated with a very low emissivity coating. The result is an externally switched cold shield which can minimise unwanted room temperature photons at both magnifications contributing to an improved signal-to-noise ratio.

It is also possible to improve cold shielding by minimising the effect of warm photons from other parts of the field of view of the detector. For example the rear surface (55) of the secondary mirror (56) of the detector Cassegrain assembly (34) is a source of such photons. This unwanted radiation can be effectively eliminated by placing a suitable concave spherical mirror on the rear surface (55) to augment the already described cold shielding. The input beam propagates from the annulus around the secondary mirror (56) so there is no need for any hole in this additional mirror. The effect of this additional cold shield will be most marked at the higher magnification although it will still have an effect at the lower magnification.

## Claims

1. An infrared imaging microscope including a sample stage (12), an infrared detector means (32) and optical elements (28, 24, 20, 22, 14, 18) for guiding analysing infrared radiation to the sample stage and for directing radiation from a sample under investigation to said detector means (32), said elements including a Cassegrain objective mirror (18) which focuses radiation emanating from the sample at an intermediate image plane (42) between the objective and the detection means, **characterised in that** the microscope further includes a magnifying assembly (40) which comprises a plurality of mirrors (44,45) including at least one magnifying mirror, said assembly (40) being disposed between the objective mirror (18) and the intermediate image plane (42), said assembly being movable between a first position in which radiation reflected by the objective mirror can pass directly to the intermediate image plane and an operative second position in which radiation reflected by the objective mirror (18) is incident on the magnifying assembly (40) to thereby change the magnification provided by the optical elements of the microscope, the magnifying assembly being so arranged that radiation emanating therefrom is focused at the intermediate image plane (42).

2. A microscope according to claim 1, wherein the magnifying assembly includes a reflecting element (43) which, when the assembly (40) is in its second position reflects the beam of radiation away from its normal direction of propagation, said magnifying mirror or mirrors (44, 45) receiving the reflected radiation.

3. A microscope according to claim 2, wherein said plurality of mirrors of the magnifying assembly (40) includes first and second magnifying mirrors (44, 45), the first (44) of which receives radiation from the reflecting element (43) and the second (45) of which receives the radiation from the first magnifying mirror, and a second reflecting element (46) for directing radiation from the second magnifying mirror along its normal direction of propagation.

4. A microscope according to claim 3, wherein the first and second magnifying mirrors comprise spherical mirrors (44,45).

5. A microscope according to claim 3 or claim 4, wherein the first and second reflecting elements (43, 46) are plane mirrors.

6. A microscope according to any one of claims 3 to 5, wherein the magnifying assembly (40) is movable between said first and second position by rotation about an axis.

7. A microscope according to claim 6, wherein said axis extends through the first and second magnifying mirrors (44, 45).

8. A microscope according to claim 6 or claim 7, wherein the angle of rotation through which the assembly (40) can be rotated is of the order of 90°.

9. A microscope according to any preceding claim including a shield (48) for shielding the detector from unwanted radiation, said shield being switchable between an operative and an inoperative position.

10. A microscope according to claim 4, including s shield (48) for shielding the detector from unwanted radiation, said shield being switchable between an operative and an inoperative position, the shield (48) comprising an element disposed along the propagation path of radiation reflected from the first magnifying mirror (44) to the second magnifying mirror (45), said element having therein an aperture and acting as a cold shield to prevent unrequired radiation arriving at the detector.

11. A microscope according to claim 10, wherein said element (48) comprises a plane mirror which allows through the aperture a beam of rays to be detected but blocks rays outside that beam.

## Patentansprüche

1. Infrarot abbildendes Mikroskop aufweisend einen Probenträger (12), ein Infrarot-Detektionsmittel (32) und optische Elemente (28, 24, 20, 22, 14, 18) zur Führung infraroter Analysestrahlung zum Probenträger und zur Ableitung von Strahlen von einer zu untersuchenden Probe zu den Detektionsmitteln (32), wobei die Elemente einen Cassegrain-Objektivspiegel (18) aufweisen, der die von der Probe ausgehende Strahlung in einer Zwischenbildebene (42) zwischen dem Objektiv und den Detektionsmitteln fokussiert, **dadurch gekennzeichnet, dass** das Mikroskop darüber hinaus eine Vergrößerungsanordnung (40) beinhaltet, die eine Vielzahl von Spiegeln (44, 45) aufweist, mit mindestens einem Vergrößerungsspiegel, wobei die Anordnung (40) zwischen dem Objektivspiegel (18) und der Zwischenbildebene (42) angeordnet ist, wobei die Anordnung zwischen einer ersten Stellung, in welcher die vom Objektivspiegel reflektierte Strahlung direkt zur Zwischenbildebene treten kann, in eine wirksame, zweite Stellung verlagerbar ist, in welcher die vom Objektivspiegel (18) reflektierte Stellung auf die Vergrößerungsanordnung (40) trifft, um dabei die durch die optischen Elemente des Mikroskops gegebene Vergrößerung zu verändern, wobei die Vergrößerungsanordnung so angeordnet ist, dass die davon ausgestrahlte Strahlung in der Zwischenbildebene (42) fokussiert ist.

2. Mikroskop nach Anspruch 1, wobei die Vergrößerungsanordnung ein reflektierendes Element beinhaltet, welches, wenn die Vorrichtung sich in ihrer zweiten Stellung befindet, den Strahl von seiner normalen Ausbreitungsrichtung ablenkt, wobei der oder die Vergrößerungsspiegel (44, 45) die abgelenkte Strahlung aufnehmen.

3. Mikroskop nach Anspruch 2, wobei die Vielzahl von Spiegeln der Vergrößerungsanordnung (40) erste und zweite Vergrößerungsspiegel (44, 45) beinhalten, wobei der erste (44) davon die Strahlung des reflektierenden Elementes (43) erhält und der zweite (45) davon die Strahlung vorn ersten Vergrößerungsspiegel erhält, und ein zweites reflektierendes Element, um die Strahlung des zweiten vergrößernden Spiegels in die normale Ausbreitungsrichtung umzulenken.

4. Mikroskop nach Anspruch 3, wobei die ersten und zweiten Vergrößerungsspiegel Hohlspiegel (44, 45) sind.

5. Mikroskop nach Anspruch 3 oder Anspruch 4, wobei das erste und zweite reflektierende Element (43, 46) Planspiegel sind.

6. Mikroskop nach irgendeinem der Ansprüche 3 bis 5, wobei die Vergrößerungsanordnung (40) um eine Achse zwischen der ersten und der zweiten Stellung drehbar ist.

7. Mikroskop nach Anspruch 6, wobei die Achse durch den ersten und zweiten Vergrößerungsspiegel (44, 45) geht.

8. Mikroskop nach Anspruch 6 oder 7, wobei der Rotationswinkel mit dem die Anordnung (40) gedreht werden kann, in der Größenordnung von 90° liegt.

9. Mikroskop nach einem der vorhergehenden Ansprüche, beinhaltend einen Schirm (48), um den Detektor von ungewünschter Strahlung abzuschirmen, wobei der Schirm zwischen einer wirksamen Stellung und einer nicht wirksamen Stellung schaltbar ist.

10. Mikroskop nach Anspruch 4, beinhaltend einen Schirm (48), um den Detektor gegen ungewollte Strahlung abzuschirmen, wobei der Schirm zwischen einer wirksamen und einer nicht wirksamen Stellung schaltbar ist, wobei der Schirm (48) ein Element aufweist, das im Ausbreitungsweg der vom ersten Vergrößerungsspiegel (44) zum zweiten Vergrößerungsspiegel (45) reflektierten Strahls liegt, wobei das Element eine Apertur aufweist und als Kälteschild wirkt, um zu vermeiden, dass unerwünschte Strahlung beim Detektor ankommt.

11. Mikroskop nach Anspruch 10, wobei das Element (48) einen Planspiegel aufweist, der einen Strahl durch die Apertur zur Detektion hindurchlässt aber Strahlen außerhalb dieses Strahls blockiert.

## Revendications

1. Microscope d'imagerie à infrarouges comprenant un étage d'échantillon (12), des moyens formant détecteur à infrarouges (32) et des éléments optiques (28, 24, 20, 22, 14, 18) pour guider un rayonnement infrarouge d'analyse vers l'étage d'échantillon et pour diriger un rayonnement d'un échantillon en cours d'examen vers lesdits moyens de détection (32), lesdits éléments comprenant un miroir d'objectif Cassegrain (18) qui focalise le rayonnement émanant de l'échantillon sur un plan d'image intermédiaire (42) entre l'objectif et les moyens de détection, **caractérisé en ce que** le microscope comprend en outre un ensemble de grossissement (40) qui comprend une pluralité de miroirs (44, 45) comprenant au moins un miroir de grossissement, ledit ensemble (40) étant disposé entre le miroir d'objectif (18) et le plan d'image intermédiaire (42), ledit ensemble pouvant être déplacé entre une première position dans laquelle le rayonnement réfléchi par le miroir d'objectif peut passer directement vers le plan d'image intermédiaire et une deuxième position de fonctionnement dans laquelle le rayonnement réfléchi par le miroir d'objectif (18) frappe l'ensemble de grossissement (40) pour, de ce fait, modifier le grossissement réalisé par les éléments optiques du microscope, l'ensemble de grossissement étant agencé de sorte que le rayonnement émanant de celui-ci soit focalisé sur le plan d'image intermédiaire (42).

2. Microscope selon la revendication 1, dans lequel l'ensemble de grossissement comprend un élément réfléchissant (43) qui, lorsque l'ensemble (40) est dans sa deuxième position, réfléchit le faisceau de rayonnement en dehors de sa direction normale de propagation, ledit ou lesdits miroirs de grossissement (44, 45) recevant le rayonnement réfléchi.

3. Microscope selon la revendication 2, dans lequel ladite pluralité de miroirs de l'ensemble de grossissement (40) comprend des premier et deuxième miroirs de grossissement (44, 45), le premier (44) d'entre eux recevant le rayonnement provenant de l'élément réfléchissant (43) et le deuxième (45) d'entre eux recevant le rayonnement provenant du premier miroir de grossissement, et un deuxième élément réfléchissant (46) pour diriger le rayonnement provenant du deuxième miroir de grossissement le long de sa direction normale de propagation.

4. Microscope selon la revendication 3, dans lequel les premier et deuxième miroirs de grossissement comprennent des miroirs sphériques (44, 45).

5. Microscope selon la revendication 3 ou la revendication 4, dans lequel les premier et deuxième éléments réfléchissants (43, 46) sont des miroirs plans.

6. Microscope selon l'une quelconque des revendications 3 à 5, dans lequel l'ensemble de grossissement (40) peut être déplacé entre lesdites première et deuxième positions par rotation autour d'un axe.

7. Microscope selon la revendication 6, dans lequel ledit axe s'étend à travers les premier et deuxième miroirs de grossissement (44, 45).

8. Microscope selon la revendication 6 ou la revendication 7, dans lequel l'angle de rotation duquel l'ensemble (40) peut être tourné est de l'ordre de 90°.

9. Microscope selon l'une quelconque des revendications précédentes, comprenant un écran (48) pour protéger le détecteur d'un rayonnement non souhaité, ledit écran pouvant être commuté entre une position de fonctionnement et une position de non fonctionnement.

10. Microscope selon la revendication 4, comprenant un écran (48) pour protéger le détecteur d'un rayonnement non souhaité, ledit écran pouvant être commuté entre une position de fonctionnement et une position de non fonctionnement, l'écran (48) comprenant un élément disposé le long du trajet de propagation du rayonnement réfléchi par le premier miroir de grossissement (44) vers le deuxième miroir de grossissement (45), ledit élément comportant dans celui-ci une ouverture et agissant en tant qu'écran froid pour empêcher qu'un rayonnement non nécessaire n'arrive au détecteur.

11. Microscope selon la revendication 10, dans lequel ledit élément (48) comprend un miroir plan qui laisse passer à travers l'ouverture un faisceau de rayons à détecter, mais qui bloque les rayons en dehors de ce faisceau.
